# EUROPÄISCHE PATENTSCHRIFT

(11) **EP 2 577 775 B1**
(45) Veröffentlichungstag und Bekanntmachung des Hinweises auf die Patenterteilung: **20.04.2016**
(21) Anmeldenummer: 11782000.1
(22) Anmeldetag: 05.05.2011
(51) Int. Cl.: H01M 2/38, H01M 10/12

(54) **FLÜSSIGELEKTROLYTBATTERIE MIT DURCHMISCHUNGSVORRICHTUNG**
LIQUID ELECTROLYTE BATTERY HAVING A MIXING DEVICE
BATTERIE À ÉLECTROLYTE LIQUIDE AVEC DISPOSITIF DE MÉLANGE

(30) Priorität: 28.05.2010 DE 102010021868
(43) Veröffentlichungstag der Anmeldung: 10.04.2013
(73) Patentinhaber: IQ Power Licensing AG, 6304 Zug (CH)
(72) Erfinder: SULLIVAN, Charles Robert, 58638 Iserlohn (DE); TSCHIRCH, Steffen, 09405 Zschopau (DE)
(74) Vertreter: Staudte, Ralph
(86) Internationale Anmeldenummer: PCT/DE2011/001030
(87) Internationale Veröffentlichungsnummer: WO 2011/147398

(56) Entgegenhaltungen:
- WO-A2-2008/019676
- WO-A2-2011/029035
- GB-A- 1 203 325
- US-A1- 2002 028 373

## Beschreibung

Die Erfindung betrifft eine Flüssigelektrolytbatterie, die vorzugsweise in Fahrzeugen oder auch Booten einsetzbar ist.

Das Bestreben insbesondere der Fahrzeugindustrie nach Leichtbauweise betrifft auch die Einsparung von Batteriegewicht. Gleichzeitig steigt jedoch die Anforderung nach höherer Batterieleistung, da neben der Energie zum Starten des Fahrzeugs auch für zusätzliche Aggregate wie elektrische Fensterheber, Stellmotore zum Verstellen der Sitze oder auch zum elektrischen Beheizen der Sitze Energie benötigt wird. Ferner ist es wünschenswert, die Batterieleistung über die Lebensdauer der Batterie möglichst auf einem konstanten hohen Niveau zu halten.

Aus dem Stand der Technik sind verschiedene Maßnahmen bekannt, um die Leistung einer herkömmlichen Blei-Säure-Batterie zu erhöhen. Unter Leistung wird nachfolgend die Fähigkeit der Batterie zur Stromabgabe bzw. zur Stromaufnahme verstanden.

Ein besonderes Problem bei Blei-Säure-Batterien ist die möglichst vollständige Nutzung der Elektrodenfläche. Ist in einem Bereich der Elektrodenoberfläche die Säurekonzentration zu hoch, führt das zu Korrosion und letztlich zur Zersetzung der Elektrodenplatten. Ist die Säurekonzentration zu niedrig, fehlen die für ein zuverlässiges Arbeiten der Batterie erforderlichen elektrolytischen Eigenschaften. Aufgrund verschiedener, aus dem Stand der Technik bekannter Effekte ist innerhalb einer Batterie die Säuredichte ungleichmäßig. Um diesen Mangel zu beheben, sind Vorrichtungen zur Elektrolytdurchmischung entwickelt worden. Damit wird auch gleichzeitig verhindert, dass sich Ablagerungen bilden, welche die Funktion und die Lebensdauer der Batterie ebenfalls beeinträchtigen.

In dem Dokument DE 9114909 U1 ist eine Akkumulatorenbatterie offenbart, bei der durch Einleiten von Gas aus einer Druckgasquelle eine Elektrolytumwälzung erzwungen wird. Dieses Umwälzverfahren eignet sich wegen des komplizierten Aufbaus der Umwälzvorrichtung nur beschränkt für Fahrzeugbatterien, zumal zusätzlich noch eine Druckgasquelle erforderlich ist.

Aus dem Stand der Technik sind weiterhin Elektrolytdurchmischungsvorrichtungen bekannt, die als hydrostatische Pumpen bezeichnet werden und deren Funktion nachfolgend beschrieben wird:
Wenn ein Fahrzeug sich mit einer gleichförmigen Geschwindigkeit bewegt, d.h. weder abgebremst noch beschleunigt wird, ist der Pegel des flüssigen Elektrolyten in der im Fahrzeug eingesetzten Batterie eben und horizontal ausgerichtet. Bei einem Brems- oder Beschleunigungsvorgang schwappt der Elektrolyt aufgrund der Massenträgheit hin und her. Die dabei entstehenden Elektrolytströmungen werden durch Barrieren und Kanäle so gelenkt, dass eine möglichst gute Durchmischung erreicht wird.

Dieses Prinzip ist u. a. in den Dokumenten US 4,963,444, US 5,096,787, US 5,032,476 und in dem deutschen Gebrauchsmuster DE 297 18 004 U1 beschrieben, welches den nächstliegenden Stand der Technik bildet. Der Gegenstand des nächstliegenden Standes der Technik ist eine zwischen den Elektroden und der Batteriekastenwand angeordnete winkelförmige Durchmischungsvorrichtung wie in Figur 1 dieses Dokuments gezeigt.

Darüber hinaus ist in dem Dokument US 2002/0028373 A1 beschrieben, dass eine Flüssigelektrolytbatterie diverse winkelförmige Vorrichtungen zur Elektrolytdurchmischung mittels wechselnder Beschleunigung oder mittels temperaturbedingter Konvektionsströmungen aufweisen kann. Während in diesem Dokument der Aufbau verschiedener Durchmischungsvorrichtungen erläutert ist, so sind ihm keine Informationen darüber, wie eine Flüssigelektrolytbatterie und eine Durchmischungsvorrichtung zusammenzubauen sind, zu entnehmen.

Der Durchmischungsgrad wird von verschiedenen Einflussgrößen bestimmt, wie z. B. von der Konsistenz der Säure, die auch temperaturabhängig ist, und von der optimal dimensionierten Geometrie der Durchmischungsvorrichtung. Es hat sich herausgestellt, dass bereits geringfügige Abweichungen von der optimalen Geometrie zu einer Verschlechterung des Wirkungsgrades der Durchmischungsvorrichtung führen.

Blei-Säure-Batterien werden vorzugsweise teilautomatisch gefertigt, sodass bei den manuell durchgeführten Montageschritten Fehler auftreten können. Wenn beim Einbau der zusammengesetzten Durchmischungsvorrichtung deren Einzelelemente nicht genau zusammengefügt werden, verändern sich die Strömungskanäle, was zu einer signifikanten Verschlechterung der Durchmischung führen kann. Es muss daher ein hoher Kontrollaufwand betrieben werden, um derartige Montagefehler zu verhindern, da diese nach der vollständigen Montage der Batterie nicht mehr feststellbar sind und nach mehreren Jahren zu einem vorzeitigen Ausfall der Batterie führen können.

Es ist aus montagetechnischen Gründen erforderlich, zuerst die senkrecht anzuordnenden Abschnitte der zweiteiligen Durchmischungsvorrichtung und dann das Paket mit den Bleielektroden in das Batteriegehäuse einzusetzen. Erst danach ist es möglich, den waagerecht anzuordnenden Abschnitt der Durchmischungsvorrichtung zu montieren. Vorzugsweise wurden bisher Clip-Verbindungen verwendet, die jedoch nicht immer zuverlässig einrasteten, sodass vorstehend beschriebene Probleme entstehen konnten. Um diese Probleme zu vermeiden, musste eine aufwendige nachträgliche Kontrolle durchgeführt werden, bevor der Batteriedeckel mit dem Batteriekasten fest verbunden wurde.

Es ist somit die Aufgabe der Erfindung, die Montagesicherheit der Durchmischungsvorrichtung zu erhöhen und eine Durchmischungsvorrichtung bereitzustellen, die auch von relativ gering qualifiziertem Personal fehlerfrei montiert werden kann.

Diese Aufgabe wird mittels einer Flüssigelektrolytbatterie nach Anspruch 1 gelöst. Die Flüssigelektrolytbatterie weist einen Batteriekasten, ein Elektrodenpaket, einen Elektrolyten und eine Durchmischungsvorrichtung auf.

Die Durchmischungsvorrichtung weist folgende Merkmale auf: eine im Einbauzustand im Batteriekasten senkrecht angeordnete Kanalplatte, die mit der Innenfläche der entsprechenden Seitenwand einen Strömungskanal ausbildet, eine im Einbauzustand im Batteriekasten waagrecht angeordnete Ablaufplatte, die sich im Einbauzustand von einer Seitenwand des Batteriekastens zu einer dieser gegenüberliegenden Seitenwand des Batteriekastens erstreckt, und ein Gelenk, welches die Kanalplatte mit der Ablaufplatte verbindet, wobei die Ablaufplatte ausgehend von ihrer waagrechten Anordnung um wenigstens 180 Grad und über die Oberkante der Seitenwand des Batteriekastens, von der sich die Ablaufplatte im Einbauzustand erstreckt, schwenkbar ist.

Je nach Einbaulage der Batterie im Fahrzeug wird beim Beschleunigen, Abbremsen oder bei Kurvenfahrt des Fahrzeugs der im Strömungskanal vorhandene Elektrolyt nach oben gedrückt, strömt aus einer an der Oberkante der Kanalplatte vorgesehenen Überlauföffnung aus, fließt auf die Ablaufplatte und entlang dieser in Richtung auf die gegenüberliegende Seitenwand der Batterie und schließlich durch eine in der Ablaufplatte vorhandene Öffnung in das Batteriegehäuse zurück, um sich mit dem dort vorhandenen Elektrolytvolumen zu vermischen.

Erfindungsgemäß sind die Kanalplatte und die Ablaufplatte über ein Gelenk miteinander verbunden. Das Gelenk garantiert eine definierte Lagebeziehung zwischen den beiden Platten und somit nach dem Einbau der Durchmischungsvorrichtung optimale Strömungsverhältnisse in dem Batteriekasten. Das Gelenk ermöglicht ein Schwenken der Ablaufplatte aus der horizontalen Lage bis über die vertikale Linie hinaus, um ein ungehindertes Einsetzen des Elektrodenpakets von oben in den Batteriekasten zu ermöglichen. Das Gelenk ermöglicht auch ein Zurückschwenken der Ablaufplatte in die horizontale Lage, nachdem das Elektrodenpaket in den Batteriekasten eingesetzt wurde. Nach dem Einschieben der Kanalplatte in den Batteriekasten, dem Hochklappen der Ablaufplatte, dem Einsetzen des Elektrodenpakets und dem Zurückklappen der Ablaufplatte kann der Batteriekasten mit einem Deckel verschlossen werden.

Bei einer Fahrzeugbatterie mit 6 Zellen sind demzufolge 6 Ablaufplatten zu verschwenken. Das erfordert weniger und einfachere Handgriffe als beim Verbinden der Ablaufplatten mit den Kanalplatten durch Clips, wie es gemäß dem Stand der Technik erfolgt. Die Erfindung hat noch einen weiteren Vorteil, der anhand des nächstliegenden Standes der Technik erläutert wird:
Bei der herkömmlichen Lösung war es erforderlich, die in den Batteriekasten einzusetzenden Kanalplatten bis auf den Boden des Batteriekastens oder gegen einen im Batteriekasten vorhandenen Vorsprung zu schieben. Wie bereits erwähnt, sind bei den Kanälen und im Bereich des Überlaufs vorbestimmte Toleranzen einzuhalten. Wenn z. B. die Kanalplatten zu lang oder zu kurz sind oder der Vorsprung, auf dem die Kanalplatten abgestützt werden, nicht genau an der vorgesehenen geometrischen Position am Batteriekasten angeordnet ist, werden auch die Oberkante der jeweiligen Kanalplatte und die dort vorgesehene Überlauföffnung nicht die optimale Position haben, um eine möglichst gute Durchmischung zu gewährleisten.

Bei der erfindungsgemäßen Lösung wird mit dem Zurückschwenken der Ablaufplatte die Durchmischungsvorrichtung automatisch in die vorgesehene optimale Position gebracht. Die Ablaufplatte und die Kanalplatte sind über das Gelenk miteinander verbunden, d. h. sie stehen in einer eindeutig definierten geometrischen Beziehung zueinander. Mit anderen Worten, die geometrische Lage der zwischen der Ablaufplatte und der Kanalplatte vorhandenen Verbindung ist entscheidend für den Wirkungsgrad der Durchmischung. Mittels des Gelenks ist diese geometrische Lage unveränderbar, im Gegensatz zur Clipverbindung gemäß dem Stand der Technik.

Die Ablaufplatte ist ausgehend von ihrer waagrechten Anordnung um wenigstens 180 Grad und über die Oberkante der Seitenwand des Batteriekastens, von der sie sich im Einbauzustand erstreckt, schwenkbar. Dadurch steht die Ablaufplatte um wenigstens 90 Grad von der Senkrechten nach außen geneigt, sodass sie durch ihr Eigengewicht sicher in dieser Position gehalten wird, d. h. nicht von selbst zurückklappt. Darüber hinaus ist dadurch, dass die Ablaufplatte um wenigstens 90 Grad von der Senkrechten nach außen abgeklappt bleibt, das Einsetzen des Elektrodenpakets von jeder Seite her möglich.

Nach Anspruch 2 ist das Gelenk der Durchmischungsvorrichtung ein Foliengelenk. Dadurch ist die Durchmischungsvorrichtung dieser Ausführungsform in einem Vorgang, z. B. durch Spritzgießen, herstellbar und somit besonders kostengünstig.

Die Erfindung wird nachfolgend anhand von schematischen Zeichnungen näher erläutert.
- Fig. 1: zeigt schematisch den Querschnitt eines Batteriekastens, die Seitenansicht eines Elektrodenpaketes und die Seitenansicht der Durchmischungsvorrichtung im aufgeklappten Zustand.
- Fig. 2: zeigt schematisch in perspektivischer Darstellung und vergrößert die Durchmischungsvorrichtung im aufgeklappten Zustand.
- Fig. 3: zeigt schematisch das Einschieben der Durchmischungsvorrichtung in den Batteriekasten.
- Fig. 4: zeigt schematisch die teilweise in den Batteriekasten eingeschobene Kanalplatte und das seitliche Abklappen der Ablaufplatte der Durchmischungsvorrichtung.
- Fig. 5: zeigt schematisch das Einsetzen des Elektrodenpakets in den Batteriekasten.
- Fig. 6: zeigt schematisch das Zurückklappen der Ablaufplatte in die horizontale Lage.
- Fig. 7: zeigt schematisch die vollständig montierte Durchmischungsvorrichtung.
- Fig. 8: zeigt eine Einzelheit der in Fig. 2 dargestellten Durchmischungsvorrichtung in einem größeren Maßstab.

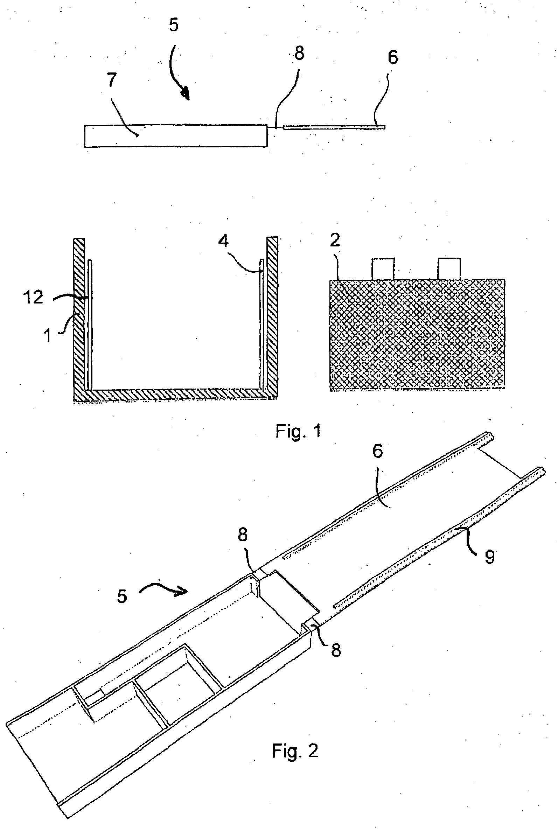

Die Fig. 1 zeigt den Querschnitt eines Batteriekastens 1, die Seitenansicht eines Elektrodenpaketes 2 und die Seitenansicht einer Durchmischungsvorrichtung 5. Die Durchmischungsvorrichtung 5 weist eine Kanalplatte 6 und eine Ablaufplatte 7 auf, welche über ein Foliengelenk 8 miteinander und schwenkbar zueinander verbunden sind. In dem Batteriekasten 1 ist eine Führungs- und Halteschiene 4 vorgesehen, in welcher die Kanalplatte 6 parallel zur Batteriekastenwand geführt wird.

Die Fig. 2 zeigt die aufgeklappte Durchmischungsvorrichtung 5 in perspektivischer Darstellung und in vergrößertem Maßstab.

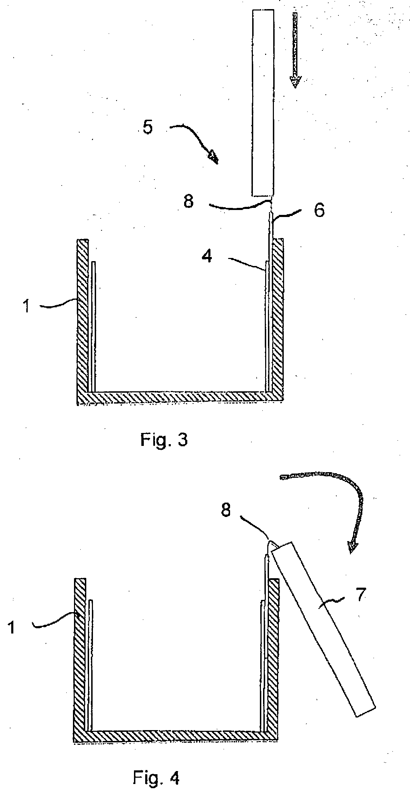

Die Fig. 3 zeigt das Einsetzen der Durchmischungsvorrichtung 5. Dazu wird die Durchmischungsvorrichtung 5 senkrecht über dem Batteriekasten positioniert und bis zu einer vorbestimmten Stelle abgesenkt, wobei die Kanalplatte 6 in der Führungs- und Halteschiene 4 und entlang die Batteriekastenwand nach unten gleitet.

Figur 4 zeigt das Umklappen der Ablaufplatte 7 der in den Batteriekasten eingesetzten Durchmischungsvorrichtung 5 über das Gelenk 8 in Richtung Außenseite der Batterieseitenwand.

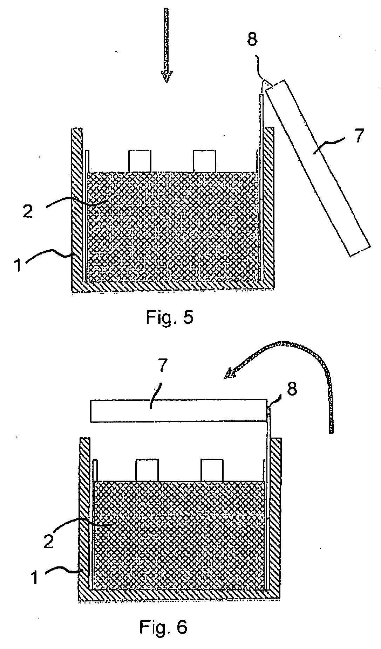

Figur 5 zeigt das Einsetzen eines Elektrodenpaketes 2 in den Batteriekasten 1 nach erfolgtem Umklappen der Ablaufplatte 7.

Figur 6 zeigt das Zurückklappen der Ablaufplatte 7 in die horizontale Lage nach dem Einsetzen eines Elektrodenpaketes 2 in den Batteriekasten 1.

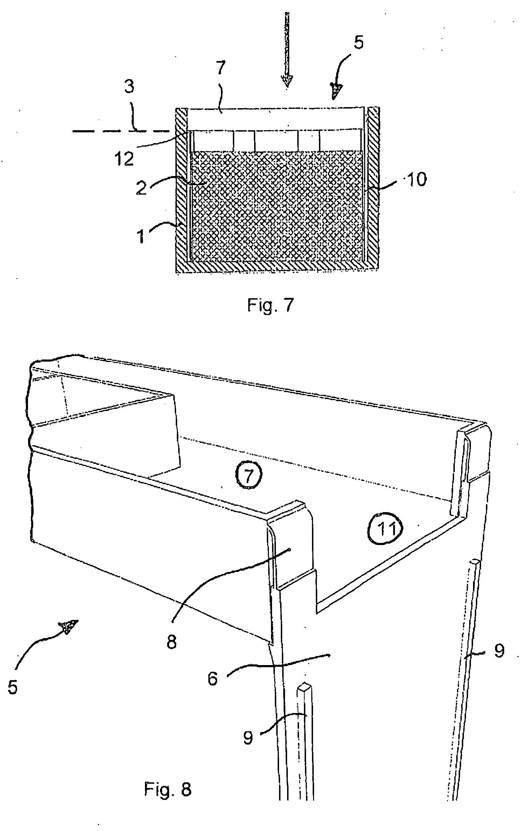

Figur 7 zeigt das Einschieben der Durchmischungsvorrichtung 5 bis in die vorgesehene Endlage auf einer Auflage 12.

Figur 8 zeigt perspektivisch und in vergrößertem Maßstab eine Einzelheit der in Figur 2 dargestellten Durchmischungsvorrichtung 5. Die an der Kanalplatte 6 vorhandenen Vorsprünge 9 dienen dazu, zwischen dieser und der entsprechenden Batteriekastenseitenwand den Strömungskanal 10 auszubilden. Die im oberen Abschnitt der Kanalplatte 6 ausgebildete Überlauföffnung 11 in Form einer Aussparung ermöglicht das Überlaufen der aus dem Strömungskanal 10 gedrückten Elektrolytmenge auf die Ablaufplatte 7.

## Patentansprüche

1. Flüssigelektrolytbatterie mit einer Durchmischungsvorrichtung **(5),** wobei die Flüssigelektrolytbatterie
- einen Batteriekasten **(1),**
- ein Elektrodenpaket **(2),**
- einen Elektrolyt mit einem Elektrolytpegel **(3)** und
- eine Durchmischungsvorrichtung **(5)**
aufweist, und
die Durchmischungsvorrichtung **(5)** folgende Merkmale aufweist:
- eine im Einbauzustand im Batteriekasten **(1)** senkrecht angeordnete Kanalplatte **(6),**
- eine im Einbauzustand im Batteriekasten **(1)** waagrecht angeordnete Ablaufplatte **(7),** die sich im Einbauzustand von einer Seitenwand des Batteriekastens **(1)** zu einer dieser gegenüberliegenden Seitenwand des Batteriekastens **(1)** erstreckt, und
- ein Gelenk **(8),** welches die Kanalplatte **(6)** mit der Ablaufplatte **(7)** verbindet, wobei
- die Ablaufplatte **(7)** ausgehend von ihrer waagrechten Anordnung um wenigstens 180 Grad und über die Oberkante der Seitenwand des Batteriekastens **(1),** von der sich die Ablaufplatte **(7)** im Einbauzustand erstreckt, schwenkbar ist.

2. Elektrolytbatterie mit Durchmischungsvorrichtung nach Anspruch 1, wobei das Gelenk **(8)** der Durchmischungsvorrichtung **(5)** ein Foliengelenk ist.

## Claims

1. A liquid electrolyte battery having a mixing device **(5),** said liquid electrolyte battery comprising
- a battery case **(1),**
- an electrode stack **(2),**
- an electrolyte having an electrolyte level **(3)** and
- a mixing device **(5),**
and
said mixing device **(5)** comprises the following features:
- a channel plate **(6)** arranged vertically in the battery case **(1)** in the installed state,
- a drainage plate **(7)** arranged horizontally in the battery case **(1)** in the installed state and extending from a side wall of the battery case **(1)** to an opposite side wall of said battery case **(1)** in the installed state, and
- a hinge **(8)** connecting the channel plate **(6)** to the drainage plate **(7),** wherein
- the drainage plate **(7)** can be pivoted by at least 180 degrees from its horizontal position and over the top edge of the side wall of the battery case **(1),** from which the drainage plate **(7)** extends in the installed state.

2. The electrolyte battery having a mixing device according to claim 1, wherein the hinge **(8)** of the mixing device **(5)** is a foil hinge.

## Revendications

1. Batterie à électrolyte liquide ayant un dispositif de mélange **(5),** la batterie à électrolyte liquide comprenant :
- un boîtier de batterie **(1),**
- une pile d'électrodes **(2),**
- un électrolyte avec un niveau d'électrolyte **(3)** et
- un dispositif de mélange **(5),**
et le dispositif de mélange **(5)** présente les caractéristiques suivantes :
- une plaque de canal **(6)** qui est disposée verticalement dans le boîtier de batterie **(1)** à l'état monté,
- une plaque d'écoulement **(7)** qui est disposée horizontalement dans le boîtier de batterie **(1)** à l'état monté et qui s'étend, à l'état monté, à partir d'une paroi du boîtier de batterie **(1)** jusqu'à une paroi du boîtier de batterie **(1)** qui lui est opposée, et
- une articulation **(8)** qui relie la plaque de canal **(6)** à la plaque d'écoulement **(7),** dans lequel
- la plaque d'écoulement **(7)** peut pivoter d'au moins 180 degrés à partir de sa position horizontale et autour du bord supérieur de la paroi du boîtier de batterie **(1)** à partir de laquelle s'étend la plaque d'écoulement **(7)** à l'état monté.

2. Batterie à électrolyte ayant un dispositif de mélange selon la revendication 1, dans laquelle l'articulation **(8)** du dispositif de mélange **(5)** est une articulation à film.
